Europäisches Patentamt

European Patent Office

Office européen des brevets

(19)

(11) Publication number: **0 135 636 B1**

## (12) EUROPEAN PATENT SPECIFICATION

(45) Date of publication of patent specification: **11.03.92**  (51) Int. Cl.⁵: **G05F 3/22**

(21) Application number: **83307394.3**

(22) Date of filing: **06.12.83**

(54) **Power supply with current regulating circuit.**

(30) Priority: **18.08.83 US 524356**

(43) Date of publication of application:
**03.04.85 Bulletin  85/14**

(45) Publication of the grant of the patent:
**11.03.92 Bulletin  92/11**

(84) Designated Contracting States:
**AT BE CH DE FR GB IT LI LU NL SE**

(56) References cited:
**US-A- 3 943 423
US-A- 3 970 912
US-A- 4 001 668**

(73) Proprietor: **Solid State Chargers Research
and Development Limited Partnership
7503 Surratts Road
Clinton, Maryland 20753(US)**

(72) Inventor: **Hoffman, Philip A.
514 Piccadilly Road
Towson Maryland 21204(US)**

(74) Representative: **Wombwell, Francis et al
Potts, Kerr & Co. 15, Hamilton Square
Birkenhead Merseyside L41 6BR(GB)**

**Description**

The present invention relates to a power supply which includes a current regulating circuit especially adaptable for integrated circuit manufacture, and more particularly, to a power supply having a rectifying means and a current regulating circuit which may be fabricated as a relatively-small solid state component and operatively associated with a smoothing circuit, which may comprise a storage capacitor, as well as other output circuitry.

While not restricted thereto, this invention finds immediate application in simple, inexpensive power supply circuits which are especially useful for powering small loads such as logic circuits, microprocessor chips and other small D.C. powered devices.

It is known from U.S. Letters Patent no. 3,943,423 to Philip A. Hoffman entitled "Battery Charging Circuit" and issued on March 9, 1976 to provide a battery charging circuit which eliminates the need for a relatively bulky and heavy voltage step-down transformer, and which, when recharging batteries in a hand tool or the like, needs simply to be connected to a conventional, 117 volt 60 Hz household outlet and to the battery cell or cells which are to be recharged. Other outlet voltage levels and/or supply frequencies can be used as well. The known charging circuit of the aforesaid Hoffman patent comprises a variable resistance switch preferably realized in the form of a NPN junction transistor and Darlington-connected other transistors operatively associated with a feedback circuit.

It is known from the further U.S. Letters Patent No. 3,970,912 issued on July 20, 1976 to Philip A. Hoffman and entitled "Battery Charging Circuit" to provide a battery charging circuit free of transformers and operatively arranged to produce current pulses which are supplied to the battery or batteries to be recharged via the inductance of an electric motor, which forms part of a cordless hand tool or the like.

It is known from U.S. Letters Patent no. 3,049,623 to Wilber E. DuVall entitled "Auxiliary Power Supply" and issued on August 14, 1962 to provide a power supply which includes a rectifier and storage capacitance, the latter being coupled to output terminals via transistor circuitry.

Voltage regulator circuits which are Zener diodes are widely used, examples can be seen in U.S. Letters Patents identified as follows:

| Numbers | Patentees | Issue Date |
|---|---|---|
| 3,217,229 | Lyttleton W. Ballard | November 9, 1965 |
| 3,530,367 | Robert A. Gardenghi | March 7, 1969. |

The invention is a direct current power supply which includes, in series, a rectifying circuit which provides an unfiltered output, a current regulating circuit and a smoothing circuit across which output from the power supply is taken, wherein the current regulating circuit is responsive to the instantaneous amplitude of the unfiltered rectified output from the rectifying circuit to pass current to the smoothing circuit during periods when the unfiltered rectified output is between a first level constituted by a voltage slightly higher than the voltage across the smoothing circuit and a higher second level and to block current to the smoothing circuit during periods when the unfiltered rectified output voltage is greater than the second level, characterized by the fact that the current regulating circuit includes a positive temperature coefficient resistance through which at least a major portion of current to the smoothing circuit flows and which increases in value as temperature increases, limiting current flow to the smoothing circuit.

The current regulating circuit in a detailed version includes a control stage and a controlled stage having a control input connected to an output from the control stage, and the control stage is provided with negative feedback.

The negative feedback is provided at least in part by internal negative feedback of the control stage.

The negative feedback may be provided at least in part by external negative feedback from the controlled stage to the control stage.

The negative feedback may be provided by internal negative feedback of the control stage and by external negative feedback from the controlled stage to the control stage.

The resistance through which at least a major portion of current to the smoothing circuit flows may serve as a fuse for fail safe operation of the circuit.

The resistance through which at least a major portion of current to the smoothing circuit flows can be formed by metallization during integrated circuit manufacture or fabrication.

The current regulating circuit can in possible embodiments, include a first resistance, a second resistance and a third resistance connected in series in the denominated order; the control stage includes a transistor having its collector-emitter path connected in series with a series connection of a fourth resistance

EP 0 135 636 B1

and the third resistance and having is base-emitter path connected in parallel with the first resistance; and the second resistance is connected between the base of the transistor and a circuit point defined by a connection between the third resistance and the fourth resistance.

The relative sizes of the first resistance $R_1$, the second resistance $R_2$, the third resistance $R_3$ and the fourth resistance $R_4$, in the power supply according to the immediately preceding paragraph, are defined as follows:

$R_1 = K_1 R_4$
$R_2 = K_2 R_4$
$R_3 = K_3 R_4$; where
$K_1 = .65 \pm .03$, $K_2 = 8.82 \pm .44$ and, $K_3 = 4.00 \pm .20$.

The direct current power supply according to immediately preceding paragraph preferably has its constants as follows:

$K_1 = .65 \pm 0.006$, $K_2 = 8.82 \pm 0.088$ and, $K_3 = 4.00 \pm 0.040$.

The current regulating circuit can in possible embodiments include a first resistance, a second resistance and a third resistance connected in series in the denominated order; the control stage includes a transistor having its collector-emitter path connected in series with a series connection of a fourth resistance and the third resistance, and having its base-emitter path connected in parallel with a series connection of a fifth resistance and the first resistance, and the second resistance is connected between the base of the transistor and a circuit point between the third resistance and the fourth resistance.

The relative sizes of said first resistance $R'_1$, the second resistance $R'_2$, the third resistance $R'_3$ and the fourth resistance $R'_4$, in a power supply according to the preceding paragraph, are desirably defined as follows:

$R_1 = K_1 R_4$
$R_2 = K_2 R_4$
$R_3 = K_3 R_4$; where
$K_1 = .57 \pm .03$, $K_2 = 7.69 \pm .38$ and, $K_3 = 4.00 \pm .20$.

The direct current power supply according to the immediately preceding paragraph preferably has its constants as follows:

$K_1 = .57 \pm 0.006$, $K_2 = 7.69 \pm 0.076$ and, $K_3 = 4.00 \pm .04$.

The current regulating circuit can in some possible embodiments include a given resistance and another given resistance providing in effect a first resistance, a second resistance and a third resistance connected in series in the denominated order; the control stage includes a transistor having its collector-emitter path connected in series with a series connection of a fourth resistance and the third resistance and having its base-emitter path connected in parallel with the given resistance and in parallel with a series connection of the another given resistance and a fifth resistance; and the second resistance is connected between the base of the transistor and a circuit point between the third resistance and the fourth resistance.

The relative sizes of the first resistance $R_1$, the second resistance $R_2$, the third resistance $R_3$ and the fourth resistance $R_4$, in a power supply according to the preceding paragraph, are defined as follows:

$R_1 = K_1 R_4$
$R_2 = K_2 R_4$
$R_3 = K_3 R_4$; where
$K_1 = .65 \pm .03$, $K_2 = 8.82 \pm .44$ and, $K_3 = 4.00 \pm .20$.

The direct current power supply according to the immediately preceding paragraph preferably has its constants as follows:

$K_1 = .65 \pm 0.006$, $K_2 = 8.82 \pm 0.088$ and, $K_3 = 4.00 \pm 0.040$.

The controlled stage may comprise a field effect transistor.

3

The field effect transistor may be a MOSFET.

The controlled stage may comprise a plurality of transistors connected in a Darlington arrangement.

A D.C. output voltage sensing circuit may be coupled to the smoothing circuit and be responsive to the level thereof for producing a control signal which is used to control the circuit means which produces the current pulses and thus the D.C. output level.

Figs. 1A and 1B are respectively a circuit diagram of a first embodiment of a power supply according to the present invention and a variant thereof.

Fig. 2 is a circuit diagram of a second embodiment of a power supply according to the present invention.

Fig. 3 is a circuit diagram of a third embodiment of a power supply according to the present invention incorporating features of the first and second embodiments.

Fig. 4 is a circuit diagram of a fourth embodiment of a power supply according to the present invention, this embodiment including a field effect transistor.

Figs. 5A-5C are voltage and current waveforms at various locations in the circuits illustrated in Figs. 1A, 1B, 2, 3 and 4 are helpful in understanding the operation thereof.

Fig. 6 is a circuit diagram of an active component smoothing circuit which may be used as a substitute for the passive smoothing circuit used in the embodiments of the power supplies illustrated in Figs. 1A, 1B and 2-4.

Fig. 7 is a circuit diagram of a passive smoothing circuit which may be substituted for the smoothing circuit used in the embodiments of the power supply illustrated in Figs. 1A, 1B and 2-4.

Fig. 8 is a circuit diagram of a fifth embodiment of a power supply according to the present invention corresponding to the circuit of Fig. 1B modified by incorporating therein a voltage output control circuit.

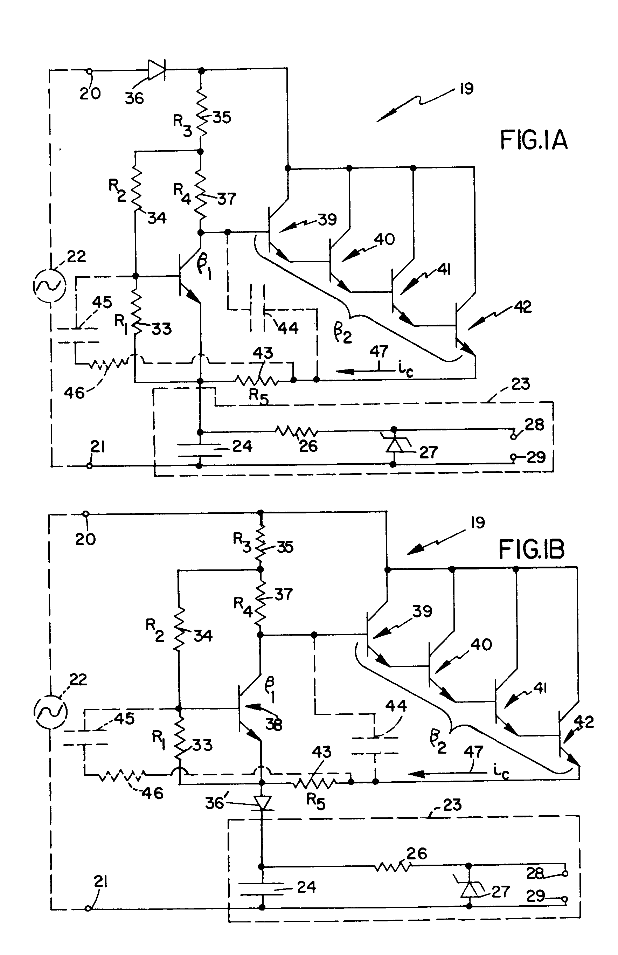

As illustrated in Figs. 1A and 1B, the illustrative, first embodiment, as well as a variant thereof, of a power supply constructed in accordance with the present invention includes a current regulating circuit generally designated by the numeral 19 and includes a pair of terminals 20, 21 which are shown, for purposes of illustration, connected across a conventional, 117 volt 60 Hz voltage source 22. Also shown in Figs. 1A and 1B is a smoothing circuit 23 which includes a 1000 $\mu$f storage capacitor 24 realized as an electrolytic capacitor having an electrode connected to the terminal 21. A 56 ohm resistor 26 and at least one Zener diode 27 are connected in series across the storage capacitor 24, output terminals 28, 29 of the power supply being connected across the Zener diode 27 or a plurality of each diodes connected in series. The Zener diode 27 can be realized, for example, as a 9.1 volt diode designated by the numeral ECG 5018A. The current regulating circuit designated generally by the numeral 19 is connected between the smoothing circuit 23 and the terminal 20, placing the storage capacitor 24 in circuit so that it can receive current pulses from the current regulating circuit 19. The current regulating circuit 19 operates to charge the capacitor 24.

It is to be appreciated that the circuit illustrated in Figs. 1A and 1B can be utilized to charge capacitors of considerably different sizes and voltage levels from sources of different levels and/or supply frequencies, the conventional 117 volt and 234 volt levels and 60 Hz frequency being set out by way of example only. The current regulating circuit 19 includes, a first resistor 33 (resistance $R_1$), a second resistor 34 (resistance $R_2$), a third resistor 35 (resistance $R_3$) and a rectifying diode 36 (Fig. 1A) or the rectifying diode 36' (Fig. 1B) connected between that plate of the capacitor 24 which is not connected to the terminal 21 and the terminal 20 of the charging circuit. As illustrated, the rectifying diode 36 (Fig. 1A) has its anode connected to the terminal 20 and its cathode connected to one end of the resistor 35. As shown in Fig. 1B, the rectifying diode 36' has its cathode connected to one of the plates of the capacitor 24, its anode being connected to the free end of the resistor 33. A fourth resistor 37 (resistance $R_4$) is connected between the connection point of the second resistor 34 and the third resistor 35 and the collector of an NPN transistor 38, which has its emitter connected to one end of the first resistor 33. The other end of the first resistor 33 is connected to the base of the transistor 38, as well as to one end of the second resistor 34. The transistor 38 and resistors 33, 34 35 and 37 constitute the control stage of the current regulating circuit 19. The collector of the transistor 38 is connected, in turn, to a current amplifier which includes a Darlington connected series of NPN junction transistors 39-42. The Darlington connected transistors are selected so as to provide a relatively high current gain, for example, a current gain ($\beta_2$) of approximately 200,000, while the control stage which includes the transistor 38 is selected to also have a current gain ($\beta_1$), for example, of about 100. The collectors of each of the transistors 39-42 are connected to the cathode of the rectifying diode 36 (Fig. 1A) or to the terminal 20 of the power supply 22 (Fig. 1B). The base of the first of the transistors 39-42, that is the transistor 39 is connected to the collector of the switching transistor 38. The emitter of the final one of the Darlington-connected transistors 39-42, that is the transistor 42, is connected to one plate of the capacitor 24 and to the emitter of the transistor 38, via a current-limiting fifth resistor 43

4

($R_5$). The current-limiting fifth resistor 43 is a positive temperature coefficient (PTC) resistance, formed by metallization from materials which are selected so that this resistor will also function as a fuse, allowing circuit failure without change to the battery undergoing recharging and endangering the surroundings. The current regulating circuit 19 illustrated in Figs. 1A and 1B, is not provided with external feedback between the output of the current amplifier constituted by the Darlington circuit configured transistors 39-42 and the switching transistor 38; however, internal feedback is provided by the third resistance 35 because of its coupling to the base of the transistor 38 via the second resistance 34 and the first resistance 33 connected as illustrated.

In order to avoid the possibility of the circuits 19 oscillating, a small capacitance 44 may be connected between the collector of the transistor 38 and the emitter of transistor 42 and/or a series connection of a small capacitor 45 and a resistor 46 is connected between the base of the transistor 38 and the emitter of the transistor 42.

By way of example only, typical values for circuit parameters of the battery charging circuit illustrated in Figs. 1A and 1B, which would be used in an exemplary integrated circuit embodiment are:

$$R_1 = 8,946 \text{ ohms}, \qquad i_a = .12 \text{ ampere (average)},$$
$$R_2 = 120,543 \text{ ohms}, \qquad i_p = 5.0 \text{ ampere (peak)},$$
$$R_3 = 54,668 \text{ ohms}, \qquad \beta_1 = 100 \text{ (current gain, control stage)},$$
$$R_4 = 13,667 \text{ ohms}, \qquad \beta_2 = 200,000 \text{ (current gain,}$$
$$R_5 = .385 \text{ ohms}, \qquad \text{current amplifier)}.$$

It is to be appreciated that the individual values for the resistances $R_1$ - $R_4$ can vary considerably, as a practical matter by about ± 20 percent, the exact values for resistances $R_1$ - $R_4$ not being nearly as important as the ratios among them. The ratios of $R_1 : R_4$, $R_2 : R_4$ and $R_3 : R_4$, in a practical case, should desirably be within the range of substantially ± 5 percent and preferably substantially ± 1 percent. These criteria make it possible to realize the charging circuits 19 of Figs. 1A and 1B as integrated circuits using diffusion techniques. It is conceived that the integrated circuit, in an exemplary practical realization can be contained within a small housing preferably of cylindrical shape and having a length of about 3/16 inch and a diameter of about 5/36 inch. Two concentric wire leads each of about one inch can be provided to extend from the housing. The smoothing circuit 23, except for the storage capacitor 24, may be part of the integrated circuit, and preferably is part thereof.

Accordingly, expressing the above-mentioned ratios as constants $K_1$, $K_2$ and $K_3$, respectively, we have:

$$K_1 = 0.65 \pm 0.03 = \frac{R_1}{R_4}, \quad K_2 = 8.82 \pm 0.44 = \frac{R_2}{R_4},$$

and

$$K_3 = 4.00 \pm 0.20 = \frac{R_3}{R_4};$$

or, as the preferred case is,

$K_1 = 0.65 \pm 0.006$, $K_2 = 8.82 \pm 0.088$ and $K_3 = 4.00 \pm 0.04$.

The fifth resistance $R_5$ need not be in a particular ratio with respect to the other resistances and can readily be formed by metallization and be constituted by a metal contact to or between circuit points. The resistance $R_5$ is desirably a positive temperature coefficient (PTC) resistance, which increases in value as temperature increases, thus limiting current flow. The size of resistance $R_5$, relative to the sizes of resistance $R_1$ - $R_4$, is very small. The resistance $R_5$ acts to stabilize the current regulating circuit which, in a practical case, operates at a temperature of about 125°C during charging when the chip is provided with a suitable thermal mounting. Charging current will decrease with an increase in ambient temperature of approximately forty-five hundredths of one percent (0.45%) per degree Centigrade.

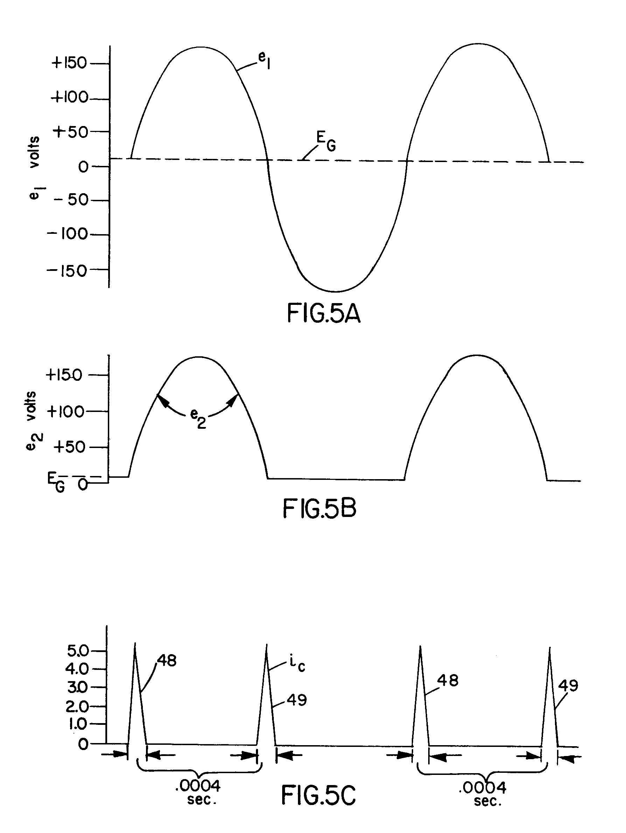

In operation, the circuit arrangement shown in Figs. 1A and 1B are placed in operation by connecting the current regulating circuit 19 to the voltage source 22 which is shown as connected between the input terminals 20,21 of the current regulating circuit 19. The capacitor 24 to be charged is connected between the terminal 21 and the current regulating circuit 31 (its voltage being illustrated in Figs. 5A and 5B as $E_b$). Fig. 5A shows the voltage waveform $e_1$ as a function of time of the input source voltage 22 for a conventional 117 volt (rms), 60 Hz household outlet supply. Fig. 5B is a waveform $e_2$ of the rectified voltage at the output of the rectifier diode 36 (Fig. 1A) or the rectifier diode 36'. The voltage waveforms as shown in Figs. 5A and 5B are illustrated for one and one-half cycles of the 60 Hz input. Fig. 5C is a corresponding waveform of the charging current $i_c$, during operation after the stable operating temperature of about 125°C has been reached, as indicated by the arrow 47 shown in Figs. 1A and 1B through the fifth resistor 43 and into capacitor 24. As can be seen in Fig. 5C, there are two current spikes 48, 49 for each cycle of A.C. input, the peak charging current $i_p$ being about 5.0 amperes. These current spikes 48, 49, as can be seen, are relatively short in duration, for example about .0004 seconds, resulting in an average charging current $i_a$ of about .12 ampere.

Referring again to Figs. 1A, 1B, the diode 36 (Fig. 1A) or the diode 36' (Fig. 1B) provides a source of input current for the Darlington configured current amplifier defined by the transistors 39-42, as well as operating voltage for the switching transistor 38 of the control stage. Initially, relatively high current spikes are produced, causing the PTC resistor 43 to increase in value, because of heating thereof; resulting in the current spikes having lesser magnitudes as they approach the 5.0 ampere level and the chip achieves its stable operating temperature of about 125°C. Thereafter, when the A.C. voltage $e_1$ of the source 22 is positive and slightly greater, for example less than 2.6 volts with respect to the voltage $E_b$ of the capacitor 24 which is to be charged, the transistors 38 and 39-42 do not conduct. When the voltage difference reaches about 2.6 volts, capacitor charging current starts to flow through the transistors 39-42, illustrated as the leading edge of the current spike 48 in Fig. 5C. The current into the base of the transistor 39 in effect is amplified by the transistors 39-42 and initially flows at a relatively low level, through the fifth resistor 43 into the capacitor 24 thereby starting to charge the capacitor 24 as the leading edge of the current spike 48 starts toward the 5.0 ampere level. This current, illustrated as current spike 48, can be considered to be increasing as the voltage supplied to the collectors via the rectifying diode 36 (Fig. 1A) or the rectifying diode 36' (Fig. 1B) becomes more positive and reaches its peak of about 5.0 amperes when the line voltage $e_1$ is about 10 volts greater than the capacitor voltage $E_b$. Increasing current is supplied not only to the Darlington connected transistors 39-42, but also to the base of the transistor 38, via the voltage divider consisting of the first resistor 33, the second resistor 34 and the third resistor 35, which are connected in series, as pointed out above, between the diode 36 (Fig. 1A) and one plate of the capcitor 24 or between the diode 36' (Fig. 1B) and the terminal 20 of the source 22. Once the current into the base of the transistor 38 is sufficient, when the line voltage $e_1$ reaches the level of about 10.0 volts greater than the voltage $E_b$ of the capacitor 24, to turn this transistor on, considerable current starts to flow through the emitter-collector path thereof, reducing the voltage, and thus the current, supplied to the base of the transistor 39 causing the current amplifier, consisting of the transistors 39-42 connected in Darlington configuration, to exhibit reduced current flow, as illustrated by the trailing edge of the current spike 48 in Fig. 5C and quickly turn off the resulting current spike 48 which has a duration of about .0004 second. The transistors 39-42 are turned off when the line voltage $e_1$ reaches a difference of about 27.6 volts with respect to storage capacitor voltage $E_b$. During this time period, because of the internal feedback provided as a result of the lowering of the voltage, at the point of connection between the second resistor 34 and the third resistor 35, the effective resistance of the transistor 38 increases. The transistors 39-42 are again turned on when the difference between the line voltage again reaches, as it falls, about 27.6 volts with respect to the storage capacitor voltage $E_b$ while the transistor 38 is conducting, with the result of the leading edge of the current spike 49 of Fig. 5C is produced, this current spike reaching a peak of about 5.0 amperes when the voltage difference between the voltage $e_1$ and the storage capacitor voltage $E_b$ again reaches about 10 volts. The transistors 39-42 remain conducting until the difference between the input voltage $e_1$ and the storage capacitor voltage $E_b$ again reaches about 2.6 volts. Thus current spike 49 of about 5.0 amperes and .0004 second duration is produced. These actions take place every other half cycle of the input voltage $e_1$ with the result that the two current spikes 48, 49 are produced, one at the starting portion and the other at the ending portion of each of these half cyles. Thus, a charging current spike is produced for a short period of time, for example, of about

.0004 seconds as indicated above during an initial portion of the rectified half-wave voltage output $e_2$ from the rectifying diode 36 (Fig. 1A) or the diode 36' (Fig. 1B) and another current spike during its terminal portion, both spikes have a duration of about .0004 seconds as indicated above. These actions take place time and time again providing, in effect, a charge in the form of current spikes to the capacitor 24 which continue until the capacitor 24 is fully charged. During this time, the capacitor may be discharging, via the output terminals 28, 29, into a load, the Zener diode 27 providing a regulated output voltage.

It is to be appreciated that were a 234 Volt, 60 $H_z$ source used instead of the 117 Volt 60 $H_z$ source (and if the effects of temperature changes within the circuit are ignored), the peak amplitude of current spikes 48, 49 (Figure 5C) would not change but the time duration of these current spikes and the average current would be halved. However, in practice, the operating temperature of the circuit at the higher source voltage would be less than when the source is 117 Volts, thereby decreasing the value of the PTC resistor 43 and increasing the peak amplitude of the current spikes 48, 49. In addition, the lower circuit temperature would increase the gate-emitter threshold voltage of transistor 38 (Figs. 1A, 1B) thereby tending to increase both the duration of the current spikes and the peak amplitudes of the current spikes. As a result of the lowered circuit temperature when the device is operated at higher source voltages, the reduction in average current is considerably less than would be the case if the circuit temperature were to remain constant.

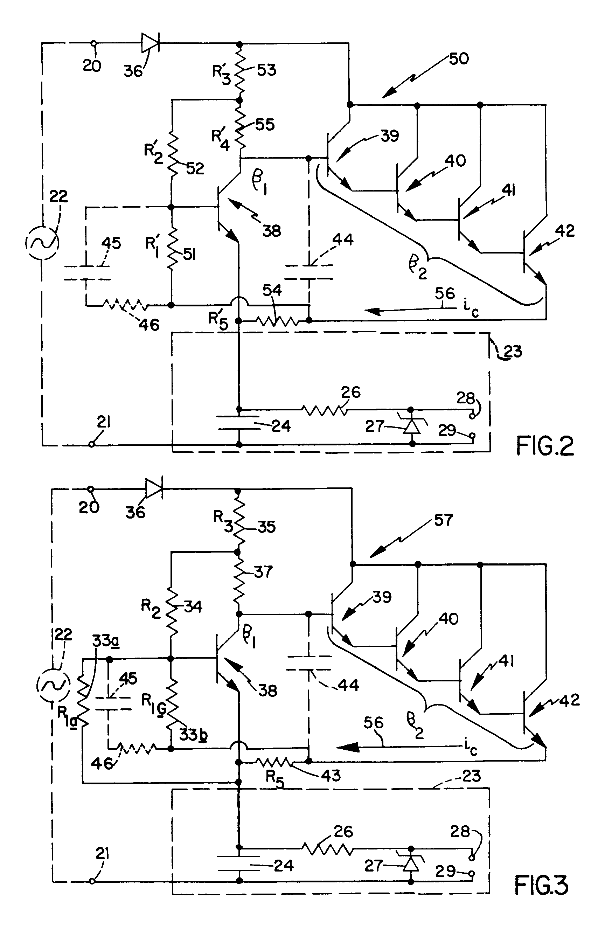

As illustrated in Fig. 2, like reference numerals designating like circuit components to those shown in Figs. 1A and 1B, the illustrative, second embodiment of a power supply circuit constructed in accordance with the present invention is generally designated by the numeral 50 and includes a pair of terminals 20, 21 which are shown, for purposes of illustration, connected across a conventional, 117 volt, 60 Hz voltage source 22. Also shown in Fig. 2 is a smoothing circuit 23 which includes a 1000 $\mu$f storage capacitor 24, which may be an electrolyte capacitor. The capacitor 24 is connected between the terminal 21 and the emitter of the transistor 38. A 56 ohm resistor 26 and at least one Zener diode 27 are connected in series across the storage capacitor 24, output terminals 28, 29 of the power supply being connected across the Zener diode 27, the Zener diode 27 can be realized, for example, as a 9.1 volt diode designated by the numeral ECG 5018A. The current regulating circuit designated generally by the numeral 50 is connected in series with the capacitor 24 across the terminals 20, 21.

The basic circuit 50, as illustrated in Fig. 2, can be used to charge capacitors from 117 volt, 60 Hz power supplies and from 234 volt, 60Hz power supplies. It is to be appreciated, however, that the charging circuit illustrated in Fig. 2 can be utilized to charge capacitors in a power supply of considerably different voltage levels and itself have different levels and/or supply frequency, the above-mentioned levels and frequency being set out by way of example only. The current regulating circuit 50 includes, a first resistor 51 (resistance $R'_1$) and a second resistor 52 (resistance $R'_2$), a third resistor 53 (resistance $R'_3$) may be included if internal feedback is desired, in series with a rectifying diode 36, connected between the capacitor 24 via a current-limiting further resistor 54 (resistance $R'_5$) and the terminal 20 of the circuit. As illustrated, the rectifying diode 36 has its anode connected to the terminal 20 and its cathode connected to one end of the third resistor 53. As in the case illustrated in Fig. 1B, a variant of the circuit of Fig. 2 is possible by replacing the diode 36, with a rectifying diode connected between one plate of the capacitor 24 and the circuit connection between the resistor 54 with the emitter connection of the transistor 38. A fourth resistor 55 (resistance $R'_4$) is connected between the connection of the second resistor 52 and the third resistor 53 and the collector of the NPN transistor 38, which has its emitter connected to the capacitor 24 and, via the fifth resistor 54, to one end of the first resistor 51, which has its other end connected to the base of the transistor 38, as well as to one end of the second resistor 52. The transistor 38 and the resistors 51-55 constitute the control stage of the current regulating circuit 50. In the event the third resistor 53 is not present, the resistance $R'_3$ being zero, and the ends of the resistor 52 and the resistor 55 not connected to electrodes of the transistor 38 would be connected directly to the cathode of the diode 36. In this case, only external feedback would be provided. The collector of the transistor 38 is connected, in turn, to a Darlington configured series of NPN junction transistors 39-42. The Darlington configured transistors 39-42 are selected so as to provide a relatively high current gain, for example, a current gain ($\beta_2$) of approximately 200,000, while the transistor 38 of the control stage is selected to also have in circuit a relatively high current gain ($\beta_1$), for example, a gain of about 100. The collectors of each of the transistors 39-42 are connected to the cathode of the rectifying diode 36. The base of the first of the transistors 39-42, that is the transistor 39, is connected to the collector of the transistor 38. The emitter of the final one of the Darlington-connected, current amplifying transistors 39-42, that is the transistor 42, is connected to the emitter of the control transistor 38, via the fifth resistor 54. The current regulating circuit 50 illustrated in Fig. 2, is provided with external feedback between the output of the amplifier constituted by the Darlington circuit configured transistors 39-42 and the switching transistor 38 via the fifth resistor 54 which has its end not connected to the capacitor 24 connected to that end of the first resistor 51 which is not connected to the base of the transistor 38. Additional internal feedback is provided, as in the embodiment illustrated in Figs. 1A and 1B, by virtue of the third resistor 53 (resistor 35, Figs. 1A and 1B) because of its coupling to the base of the transistor 38, as illustrated.

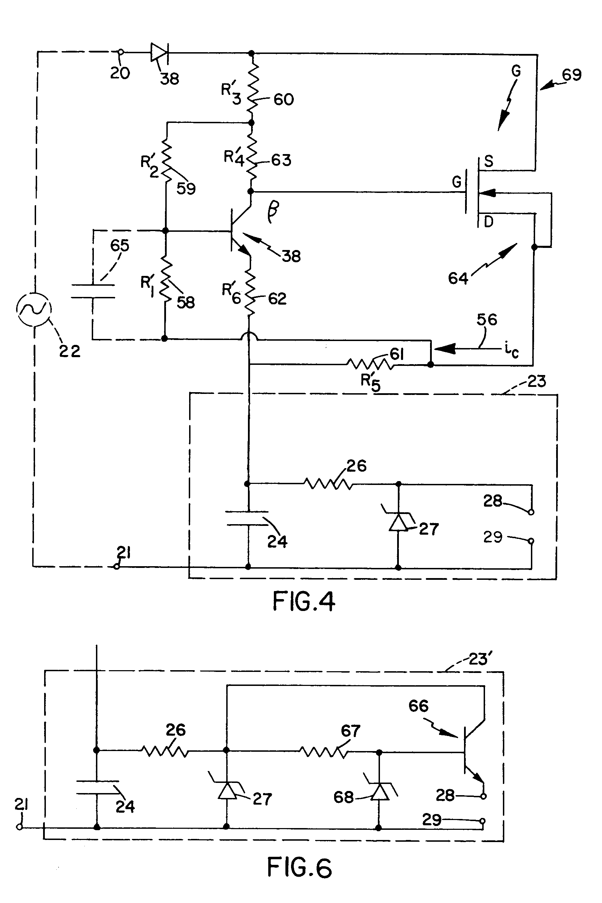

Again, by way of example only, typical values for circuit parameters of the charging circuit illustrated in Fig. 3, which could be used in an integrated circuit embodiment are:

$$R'_1 = 7,640 \text{ ohms}, \quad i_a = .12 \text{ ampere (average)},$$
$$R'_2 = 102,740 \text{ ohms}, \quad i_p = 5.0 \text{ ampere (peak)},$$
$$R'_3 = 53,440 \text{ ohms}, \quad \beta_1 = 100 \text{ (current gain, control stage)},$$
$$R'_4 = 13,360 \text{ ohms}, \quad \beta_2 = 200,000 \text{ (current gain, current amplifier)}.$$
$$R'_5 = .110 \text{ ohms},$$

As in the embodiment illustrated in Figs. 1A, 1B, the individual values for the resistances $R'_1$ - R'4 can vary considerably, as a practical matter by about ± 20 percent, the exact values for resistances $R'_1$ - $R'_4$ not being as important as the ratios among them. The ratios of $R'_1 : R'_4$, $R'_2 : R'_4$ and $R'_3 : R_4$, in a practical case should desireably be within the range of substantially ± 5 percent and preferably substantially ± 1 percent. These criteria make it possible to realize the current regulating circuit 50 of Fig. 2 as an integrated circuit using diffusion techniques, the same dimensional characteristics mentioned in conjunction with the embodiment illustrated in Figs. 1A and 1B applying equally well to this embodiment. Accordingly, expressing the above-mentioned ratios as constants $K'_1$, $K'_2$ and $K'_3$, respectively, we have

$$K'_1 = 0.57 \pm 0.03 = \frac{R'_1}{R'_4}, \quad K'_2 = 7.69 \pm 0.38 = \frac{R'_2}{R'_4},$$

and

$$K'_3 = 4.00 \pm 0.20 = \frac{R'_3}{R'_4};$$

or, as the prefered case is:

$K'_1 = 0.57 \pm 0.066$, $K'_2 = 7.69 \pm 0.076$, and $K'_3 = 4.00 \pm 0.04$.

The resistance $R_5$ need not be in a particular ratio with respect to the other resistances and can easily be formed by metallization and be constituted by a metal contact to or between circuit points. As in the cases of Figs. 1A and 1B, the resistance $R_5$ is desirably, a positive temperature coeffecient (PTC) resistance, which increases in value as the temperature increases, thus limiting the current flow and serving to stabilize the circuit which in a practical integrated circuit version may operate at a chip temperature of about 125°C during battery charging when the chip is provided with a suitable thermal mounting. The PTC resistor 54 ($R'_5$) is preferably formed by metallization with materials which are selected so that the resistor will also function as a fuse, allowing the circuit to fail without damaging the capacitor 24 undergoing charging, the other components of the smoothing circuit 23 and the device or devices connected to the terminals 28, 29, and endangering the surroundings. Charging current will decrease with an increase in ambient temperature of approximately 1/4 percent per degree Fahrenheit.

In order to avoid the possibility of the circuit 50 oscillating, a small capacitance 44 may be connected between the collector of the transistor 38 and the emitter of the transistor 42 and/or a series connection of a small capacitor 45 and a resistor 46 may be connected between the base of the transistor 38 and the emitter of the transistor 42.

In operation, the circuit arrangement shown in Fig. 2 is placed in operation in the same manner as the circuit of Fig. 1A, the waveform shown in Figs. 5A-5C applying as well to the circuit of Fig. 2.

In the circuit illustrated in Fig. 2, the current spikes 48, 49 may reach, as illustrated in Fig. 5C, a magnitude of about 5.0 amperes or thereabouts after operating temperature has been reached, so as to provide an average charging current of approximately .12 ampere, the current spikes 48, 49 each being of about .0004 second duration. The principal difference in operation between the circuit of Fig. 1A and that of Fig. 2 is that the circuit of Fig. 2 provides both internal feedback, because of resistor 53, and external feedback, because of resistor 54, to the transistor 38.

In operation, the external feedback provided by the fifth resistor 54 as connected and the internal feedback provided by the third resistor 53 if present as connected can be considered, in effect, to vary the resistance of the control stage and cause the transistor 38 to limit current flow in the transistor 39-42 to periods when relatively low voltages are present and to, in effect, turn the transistors 39-42 off during times higher voltages are present.

As illustrated in Fig. 3, a third embodiment, a power supply constructed in accordance with the present invention includes a current regulating circuit generally designated by the numeral 57 and includes a pair of terminals 20, 21 which are shown, for purposes of illustration, connected across a conventional, 117 volt 60 Hz voltage source 22. Also shown in Fig. 3 is a smoothing circuit 23 which includes a 1000 $\mu$f storage capacitor 24 realized as an electrolytic capacitor connected between the terminal 21 and the emitter of a transistor 38. A 56 ohm resistor 26 and at least one Zener diode 27 are connected in series across the storage capacitor 24, output terminals 28, 29 of the power supply being connected across the Zener diode 27. The Zener diode 27 can be realized, for example, as a 9.1 volt diode designated by the numeral ECG 5018A. The current regulating circuit designated generally by the numeral 57 is connected in series with the storage capacitor 24 across the terminals 20, 21 so that it can receive current pulses from the current regulating circuit 57.

It is to be appreciated that the circuit illustrated in Fig. 3 can be utilized to charge capacitors of considerably different sizes and voltage levels from sources of different levels and/or supply frequencies, the conventional 117 volt and 234 volt levels and 60 Hz frequency being set out by way of example only. The current regulating circuit 57 includes, a first resistive impedance defined by resistors 33a and 33b considered to be connected in parallel and hereinbelow referred to as the "first resistor" (resistance $R_1$), a second resistor 34 (resistance $R_2$), a third resistor 35 (resistance $R_3$) and a rectifying diode 36 connected between one plate of the capacitor 24 and the terminal 20 of the charging circuit. As illustrated, the rectifying diode 36 has its anode connected to the terminal 20 and its cathode connected to one end of the resistor 35. It is to be understood, however, that the diode 36 shown in Fig. 3, could be replaced, as shown in Fig. 1B, by the rectifying diode 36' having its cathode connected to one plate of the capacitor 24, its anode being connected to the free end of the resistor 33a. A fourth resistor 37 (resistance $R_4$) is connected between the connection point of the second resistor 34 and the third resistor 35 and the collector of an NPN transistor 38, which has its emitter connected to the stationary contact 31 of the manually operated switch 25 and to one end of the resistor 33b. The other end of the resistor 33b is connected to the base of the transistor 38, as well as to one end of the second resistor 34. The transistor 38 and resistors 33a, 33b, 34, 35 and 37 constitute the control stage of the current regulating circuit 57. The collector of the transistor 38 is connected, in turn, to a current amplifier which includes a Darlington connected series of NPN junction transistors 39-42. The Darlington connected transistors are selected so as to provide a relatively high current gain, for example, a current gain ($\beta_2$) of approximately 200,000, while the control stage which includes the transistor 38 is selected to also have a current gain ($\beta_1$), for example, of about 100. The collectors of each of the transistors 39-42 are connected to the cathode of the rectifying diode 36 (or to the terminal 20 of the power supply 22 in the event the circuit is modified by replacing the diode 36 with the diode 36' as shown in Fig. 1B). The base of the first of the transistors 39-42, that is the transistor 39 is connected to the collector of the switching transistor 38. The emitter of the final one of the Darlington-connected transistors 39-42, that is the transistor 42, is connected to the stationary contact 31 of the manually-operated switch 25 and to the emitter of the transistor 38, via a current-limiting fifth resistor 43 ($R_5$). The current-limiting fifth resistor 45 is a positive temperature coefficient (PTC) resistance, formed by metallization from materials which are selected so that this resistor will also function as a fuse, allowing circuit failure without changing to the capacitor undergoing charging and endangering the surroundings. The current regulating circuit 57 illustrated in Fig. 3, is provided with external feedback between the output of the current amplifier constituted by the Darlington circuit configured transistors 39-42 and the switching transistor 38 by the connection between the resistor 43 and the resistor 33b. Internal feedback is provided by the resistor 35 because of its coupling to the base of the transistor 38 via the resistor 34 and the 33a connected as illustrated. For purposes of selecting values of the resistances $R_2$ - $R_4$ and the resistance $R_1$ -

(which may be calculated as the effective resistance of resistors 33a and 33b connected in parallel, resistor 43 being very small) as well as the ratios and ranges thereof, the criteria and calculations associated with the circuit of Fig. 1A are applied, as indicated below in detail.

As in the embodiments illustrated in Figs. 1A, 1B and 2, in order to assure the circuit will not, under some circumstances undesirably oscillate, a small capacitor 44 and/or series connection of a small capacitor 45 and a resistor 45 may be connected as shown in Fig. 3 in the same fashion as illustrated in Figs. 1A, 1B and 2.

By way of example only, typical values for circuit parameters of the regulating circuit illustrated in Fig. 4, which would be used in an exemplary integrated circuit embodiment are:

$$R_1 = 8,946 \text{ ohms}, \quad i_a = .12 \text{ ampere (average)},$$
$$R_2 = 120,543 \text{ ohms}, \quad i_p = 5.0 \text{ ampere (peak)},$$
$$R_3 = 54,668 \text{ ohms}, \quad \beta_1 = 100 \text{ (current gain, control stage)},$$
$$R_4 = 13,667 \text{ ohms}, \quad \beta_2 = 200,000 \text{ (current gain, current amplifier)}.$$
$$R_5 = .385 \text{ ohms},$$

It is to be appreciated that the individual values for the resistances $R_1$ - $R_4$ can vary considerably, as a practical matter by about ± 20 percent, the exact values for resistances $R_1$ - $R_4$ not being nearly as important as the ratios among them. The ratios of $R_1 : R_4$, $R_2 : R_4$ and $R_3 : R_4$, in a practical case, should desirably be within the range of substantially ± 5 percent and preferably substantially ± 1 percent. These criteria make it possible to realize the charging circuit 57 of Fig. 3 as an integrated circuit using diffusion techniques. It is conceived that the integrated circuit, in an exemplary practical realization can be contained within a small housing preferably of cylindrical shape and having a length of about 3/16 inch and a diameter of about 5/36 inch. Two concentric wire leads each of about one inch can be provided to extend from the housing. The smoothing circuit 23, except for the storage capacitor 24, may be and preferably is part of the integrated circuit.

Accordingly, expressing the above-mentioned ratios as constants $K_1$, $K_2$ and $K_3$, respectively, we have:

$$K_1 = 0.65 \pm 0.03 = \frac{R_1}{R_4}, \quad K_2 = 8.82 \pm 0.44 = \frac{R_2}{R_4},$$

and

$$K_3 = 4.00 \pm 0.20 = \frac{R_3}{R_4};$$

or, as the preferred case is,

$K_1 = 0.65 \pm 0.006$, $K_2 = 8.82 \pm 0.088$ and $K_3 = 4.00 \pm 0.04$.

The fifth resistance $R_5$ need not be in a particular ratio with respect to the other resistances and can readily be formed by metallization and be constituted by a metal contact to or between circuit points. The resistance $R_5$ is desirably a positive temperature coefficient (PTC) resistance, which increases in value as temperature increases, thus limiting current flow. The size of resistance $R_5$, relative to the sizes of resistances $R_1$ - $R_4$, is very small. The resistance $R_5$ acts to stabilize the current regulating circuit which, in a practical case, operates at a temperature of about 125°C during battery charging when the chip is provided with a suitable thermal mounting. Charging current will decrease with an increase in ambient temperature of approximately forty-five hundredths of one percent (0.45%) per degree Centigrade.

The circuit shown in Fig. 3, operates in the same fashion as those circuits illustrated in Figs. 1A, 1B and 2 so far as the above-set-out description of the operation of these circuits are concerned, references being made to Figs. 5A-5C; accordingly these need not be repeated at this point.

As illustrated in Fig. 4, like reference numerals designating like circuit components as those in Figs. 1A, 1B, 2 and 3, the illustrative, fourth embodiment of a power supply constructed in accordance with the present invention includes a current regulating circuit having a pair of terminals 20, 21 which are shown, for purposes of illustration, connected across a conventional, 117 volt, 60 Hz voltage source 22. Also shown in Fig. 4 is a smoothing circuit 23 which includes a 1000 μf storage capacitor 24, which may be an electrolytic capacitor connected between the terminal 21 and the emitter of a transistor 38 via its emitter bias resistor. A 56 ohm resistor 26 and at least one Zener diode 27 are connected in series across the capacitor 24, output terminals 28, 29 of the power supply being connected across the Zener diode 27 which may be realized, for example, as a 9.1 volt diode designated by the numeral ECG 5018A. The current regulating circuit designated generally by the numeral 69 is connected in series with the capacitor 24 across the A.C. source 22, via the terminals 20, 21.

The current regulating circuit 69, as illustrated in Fig. 4, can be used to charge the capacitor 24 from 117 volt, 60 Hz power supplies and from 234 volt, 60 Hz power supplies. It is to be appreciated, however, that the current regulating circuit illustrated in Fig. 4 can be utilized to charge capacitors of considerably different voltage levels and itself have different levels and/or supply frequency, the above-mentioned levels and frequency being set out by way of example only. The current regulating circuit 58 includes, a first resistor 58 (resistance $R'_1$) and a second resistor 59 (resistance $R'_2$), a third resistor 60 (resistance $R'_3$) which is included if internal feedback is desired, and a fifth resistor 54 (resistance $R'_5$) in series with a rectifying diode 36 connected between a terminal 20, connected to an A.C. source 22, and one end of the resistor 60 (alternatively, the rectifying diode may be connected, as illustrated by rectifying diode 36' as illustrated in Fig. 1B). A further resistor 62 (resistance $R'_6$) is connected between the emitter of the transistor 38 and one plate of the capacitor 24 or to anode of the rectifying diode 36', were the circuit of Fig. 4 modified by placing the rectifying diode as shown in Fig. 1B. As illustrated, the rectifying diode 36 has its anode connected to the terminal 20 and its cathode connected to one end of the third resistor 60. A fourth resistor 63 (resistance $R'_4$) is connected between the connection of the second resistor 59 and the third resistor 60 and the collector of the NPN transistor 38, which has its emitter connected to the capacitor 24, via the further resistor 62, and, via the fifth resistor 61, to one end of the first resistor 58, which has its other end connected to the base of the transistor 38, as well as to one end of the second resistor 59. The transistor 38 and the resistors 58-63 constitute the control stage of the current regulating circuit 69. In the event the third resistor 60 is not present, the resistance $R_3$ being zero, and the ends of the resistor 59 and the resistor 63 not connected to electrodes of the transistor 38 would be connected directly to the cathode of the diode 36 or to the terminal 20 in the event the diode is positioned as diode 36', shown in Fig. 1B. only external feedback would be provided were the value of resistance $R'_3$ zero. The collector of the transistor 38 is connected, in turn, to the gate electrode (G) of a field-effect-transistor (FET), preferably a metal oxide, silicon field-effect-trasistor (MOSFET) 64. The MOSFET 64 is selected so as to provide a relatively high transconductance (G) of about two mhos while the transistor 38 of the control stage is selected to also have in circuit a relatively high current gain ($\beta$), for example, a gain of about 100. The source electrode (S) of the MOSFET 64 is connected to the cathode of the rectifying diode 36 (or to terminal 20 if the diode is positioned as shown in Fig. 1B). The gate of the MOSFET 64 is connected to the collector of the transistor 38. The drain electrode (D) of the MOSFET 64 is connected to the one plate of the capacitor 24 (or to the anode of the rectifying diode 36 if the diode is positioned as shown in Fig. 1B) and to the emitter of the control transistor 38, via the fifth resistor 61. The substrate of the MOSFET 64 is conductively connected to its drain electrode (D). The current regulating circuit 58 illustrated in Fig. 4 is provided with external feedback between the output of the amplifier constituted by the MOSFET 64 and the switching transistor 38 via the fifth resistor 61 which has its end not connected to the stationary contact 31 (or the anode of the diode 36' were the variant feature of Fig. 1B used) connected to that end of the first resistor 58 which is not connected to the base of the transistor 38. Additional internal feedback is provided, as in the embodiment illustrated in Fig. 2, but virtue of the third resistor 60 because of its coupling to the base of the transistor 38, as illustrated.

To avoid the circuit going into oscillation, a small capacitor 65 for example, a 1200 $\rho$f capacitor, may be connected in parallel with the resistor 58.

Again, by way of example only, typical values for circuit parameters of the current regulating circuit illustrated in Fig. 4, which could be used in an integrated circuit embodiment are:

$$R'_1 = 3,900 \text{ ohms}, \quad i_a = .12 \text{ ampere (average)},$$

$$R'_2 = 100,000 \text{ ohms}, \quad i_p = 5.0 \text{ ampere (peak)},$$

$$R'_3 = 18,000 \text{ ohms}, \quad \beta = 100 \text{ (current gain, control stage)},$$

$$R'_4 = 36,000 \text{ ohms}, \quad G = 2.0 \text{ mhos (transconductance of MOSFET amplifier)}.$$

$$R'_5 = .07 \text{ ohms},$$

$$R'_6 = 270 \text{ ohms},$$

As in other embodiments, in the embodiment illustrated in Fig. 4, the individual values for the resistances $R'_1$ - $R'_4$ can vary considerably, as a practical matter by about ± 20 percent, the exact values for resistance $R'_1$ - $R'_4$ not being as important as the ratios among them. The ratios of $R'_1$; $R'_4$, $R'_2$: $R'_4$ and $R'_3$: $R'_4$, in a practical case should desirably be within the range of substantially ± 5 percent and preferably substantially ± 1 percent. These criteria make it possible to realize the current regulating circuit portion of the circuit of Fig. 4 as an integrated circuit using diffusion techniques, the same dimensional characteristics mentioned in conjunction with the other embodiments applying equally well to this embodiment. Accordingly, expressing the above-mentioned ratios as constants $K'_1$, $K'_2$, and $K'_3$, respectively we have

$$K'_1 = 0.57 \pm 0.03 = \frac{R'_1}{R'_4}, \quad K'_2 = 7.69 \pm 0.38 = \frac{R'_2}{R'_4},$$

and

$$K'_3 = 4.00 \pm 0.20 = \frac{R'_3}{R'_4};$$

or, as the preferred case is:

$K'_1 = 0.57 \pm 0.066$, $K'_2 = 7.69 \pm 0.076$ and $K'_3 = 4.00 \pm 0.04$.

The resistance $R'_5$ need not be in a particular ratio with respect to the other resistances and can easily be formed by metallization and be constituted by a metal contact to or between circuit points. As in the case of the other embodiments, the resistance $R'_5$ is desirably, a positive temperature coefficient (PTC) resistance, which increases in value as the temperature increases, thus limiting the current flow and serving to stabilize the circuit which in a practical integrated circuit version may operate at a chip temperature of about 125°F during battery charging when the chip is provided with a suitable thermal mounting. The PTC resistor 61 ($R'_5$) is preferably formed by metallization with materials which are selected so that the resistor will also function as a fuse, allowing the circuit to fail without damaging the capacitor undergoing charging, its associated circuit components and/or the device or devices which may be connected to the output terminals 28, 29. Charging current will decrease with an increase in ambient temperature of approximately 1/4 percent per degree Fahrenheit. The resistor 62, serving principally as a biasing resistor for the transistor 38 need not be in any particular ratio relationship to the resistances $R_1$-$R_4$.

The power supply circuit illustrated in Fig. 4 operates in much the same fashion as the circuits illustrated in Fig. 2, the MOSFET 64 (Fig. 4) being turned on and off by the control stage, which includes the transistor 38, as the Darlington configuration of transistors 39-42 (Fig. 2). A detailed discussion of the operation does not appear to be necessary for the waveforms shown in Figs. 5A-5C are produced by the circuit of Fig. 4 in much the same fashion as the circuit of Fig. 2.

The circuit of Fig. 4, operates essentially as the circuit of Fig. 2 so far as the waveforms illustrated in Figs. 5A-5C are concerned; according, no detailed discussion of the sequence of operation need be repeated at this point.

In operation, the external feedback provided by the fifth resistor 61 as connected and the internal feedback provided by the third resistor 60, if present as connected can be considered, in effect, to vary the resistance of the control stage and cause its active component, transistor 38, to limit current flow in the MOSFET 64 to periods when relatively low voltages are present and to, in effect, turn the MOSFET 64 off during times higher voltages are present.

It is to be appreciated that a field effect transistor can be used as a replacement for the Darlington configured transistors 39-42 in any of the embodiments.

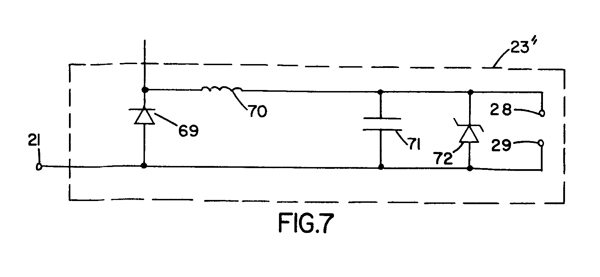

Referring to Fig. 6, an active smoothing circuit 23' is illustrated. It may be substituted for the smoothing circuit 23 mentioned in connection with the embodiments and variants shown in Figs. 1A, 1B, 2, 3 and 4. The circuit of Fig. 6 includes, in addition to the circuit elements of smoothing circuit 23 an NPN transistor 65, which may be an ECG 198, having its collector-emitter electrode path connected in series with the Zener diode 27 which, in this case, may be a 12 volt diode available under the designation ECG 5127A, a resistive conductive connection extending between the cathodes of the Zener diode 27 and the cathode of a Zener diode 68 which, in this case, may be a 9.1 volt diode available under the designation ECG 5018A, this connection including a 330 ohm resistor 67. The resistor 26 may be realized as a 33 ohm resistor and the storage capacitor 24 as a 1000 $\mu$f capacitor. The collector of the transistor 66 is conductively connected to a circuit point between the resistor 67 and the Zener diode 27, this point being conductively connected to the collector of the transistor 66. The smoothing circuit 23' illustrated in Fig. 6, as well as the smoothing circuit 23 shown in other figures, provides a maximum output current of about .12 ampere, its output ripple voltage, in both cases, in the output range is less than one millivolt peak-to-peak.

As illustrated in Fig. 7, a passive smoothing circuit 23", which may be substituted for the smoothing circuits 23 and 23', includes a flyback diode 69 having its anode connected to one terminal 21 of the A.C. source, its cathode being connected to one end of an inductor 70. The other end of the inductor 70 is connected to one plate of a storage capacitor 71 which has its other plate connected to the anode of the flyback diode 69 and the terminal 21. A Zener diode 72 is connected across the capacitor 72, the Zener diode being poled in the same fashion as the flyback diode 69. A pair of output terminals 28,29 are connected across the capacitor 71. The components of the circuit illustrated in Fig. 7, except for the capacitor 71 and inductor 70 may be and preferably are formed on the same chip as the other circuit components as an integrated circuit. In many instances, it may be desirable from commercial considerations to not form any of the components of the circuit 23" as a part of a chip, electing to use other conventional techniques to form the circuit 23", such as using circuit boards and the like.

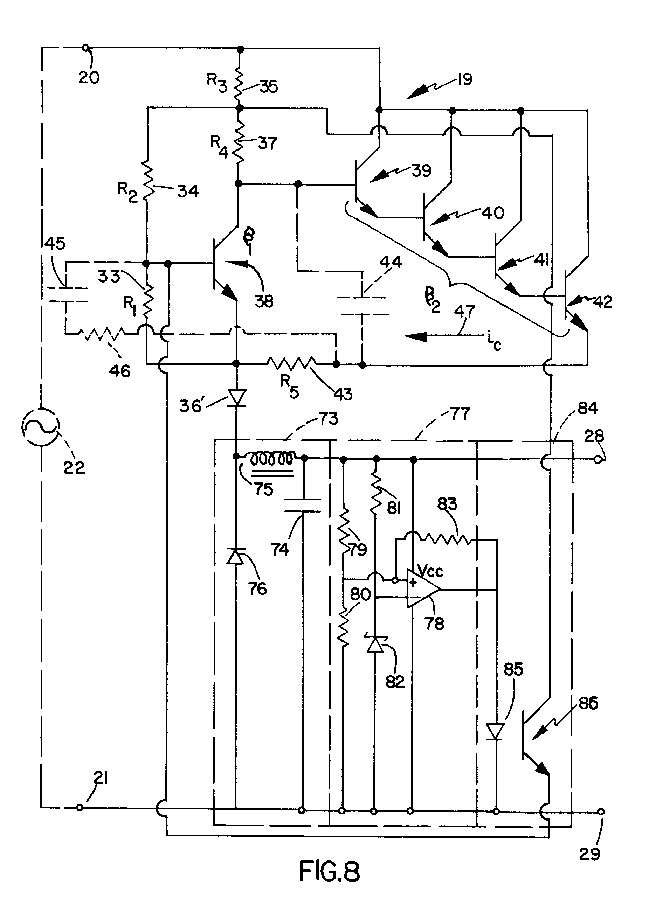

As illustrated in Fig. 8, the illustrative fifth embodiment of a power supply constructed in accordance with the present invention and similar to the embodiment illustrated in Fig. 1B includes a current regulating circuit generally designated by the numeral 19 and includes a pair of terminals 20, 21 which, as shown for purposes of illustration, is connected across a conventional 117 volt, 60 Hz voltage source 22. Also shown in Fig. 8 is a smoothing circuit 73 which includes a 1000 $\mu$f storage capacitor 74 realized as an electrolytic capacitor having an electrode connected to the terminal 21. An iron core inductor 75 and a flyback diode 76 are connected in series with one another across the storage capacitor 74, output terminals 28, 29 of the power supply being connected across the storage capacitor 74. The flyback diode 76 has its anode connected to the terminal 21 of the A.C. source, its cathode being connected to one end of the inductor 75 and to the cathode of a rectifying diode 36'. The current regulating circuit, which includes the rectifying diode 36' and designated generally by the numeral 19, is connected between the smoothing circuit 73 and the terminal 20, placing the storage capacitor 74, and the inductor 74 in circuit so that current pulses from the current regulating circuit 19, smoothed by the inductor 75, charge the capacitor 74.

The current regulating circuit 19 illustrated in Fig. 8 includes, a first resistor 33 (resistance $R_1$), a second resistor 34 (resistance $R_2$), a third resistor 35 (resistance $R_3$) and the rectifying diode 36' connected, via the inductor 75, between that plate of the capacitor 74 which is not connected to the terminal 21 and the terminal 20 of the charging circuit. The rectifying diode 36' has its cathode connected to that end of the inductor 75 not connected to the capacitor 74 and to the cathode of the flyback diode 76, its anode being connected to the free end of the resistor 33. A fourth resistor 37 (resistance $R_4$) is connected between the connection point of the second resistance 34 and the third resistor 35 and the collector of an NPN transistor 38 which has its emitter connected to one end of the first resistor 33. The other end of the first resistor 33 is connected to the base of the transistor 38, as well as to one end of the second resistor 34. The transistor 38 and the resistors 33, 34, 35 and 37 constitute the control stage of the current regulating circuit 19. The collector of the transistor 38 is connected, in turn, to a current amplifier which includes a Darlington connected series of NPN junction transistors 39-42. The Darlington connected transistors are selected so as to provide a relatively high current gain, for example, a current gain ($\beta_2$) of approximately 200,000, while the control stage which includes the transistor 38 is selected to have a current

gain ($\beta_1$), for example, of about 100. The collectors of each of the transistors 39-42 are connected to the terminal 20 of the power supply 22. The base of the first of the transistors 39-42, that is the transistor 39 is connected to the collector of the switching transistor 38. The emitter of the final one of the Darlington-connected transistors 39-42, that is the transistor 42, is connected to the anode of the rectifying diode 36' and to the emitter of the transistor 38, via a current-limiting fifth resistor 43 ($R_5$). The current-limiting fifth resistor 43 is a positive temperature coefficient (PTC) resistance, formed by metallization from materials which are selected so that this resistor will also function as a fuse, allowing circuit failure without damage to the smoothing circuit or load and endangering the surroundings. The current regulating circuit 19 illustrated in Fig. 8 is not provided with external feedback between the output of the current amplifier constituted by the Darlington circuit configured transistors 39-42 and the switching transistor 38; however, internal feedback is provided by the third resistance 35 because of its coupling to the base of the transistor 38 via the second resistance 34 and the first resistance 33 connected as illustrated.

In order to avoid the possibility of the circuit 19 oscillating, a small capacitance 44 may be connected between the collector of the transistor 38 and the emitter of transistor 42 and/or a series connection of a small capacitor 45 and a resistor 46 is connected between the base of the transistor 38 and the emitter of the transistor 42.

By way of example only, typical values for circuit parameters of the current regulating circuit 19 illustrated in Fig. 8 correspond to those of Figs. 1A and 1B having corresponding reference numerals.

It is to be appreciated that the individual values for the resistance $R_1$ - $R_4$ of the circuit of Fig. 8 can vary considerably, as a practical matter, like the circuits of Figs. 1A, 1B, by about ± 20 percent, the exact values for resistance $R_1$ - $R_4$ not being nearly as important as the ratios among them. The ratios of $R_1$: $R_4$, $R_2$: $R_4$ and $R_3$; $R_4$, in a practical case, should desirably be within the range of substantially ± 1 percent and correspond to those set out above with reference to Figs. 1A and 1B.

A D.C. output voltage sensing circuit 77 is provided which is responsive to the D.C. output voltage which appears across the output terminals 28, 29. The sensing circuit as illustrated, is realized as a Schmidt trigger circuit. The Schmidt trigger includes an operational amplifier 78 which has its noninverting input terminal connected to a point between a resistor 81 and a Zener diode 82 connected in series across the capacitor 74 and thus the output terminals 28, 29. The output terminal of the operational amplifier 78 is connected to its noninverting input terminal via a resistor 83. Operating bias $V_{cc}$ for the operational amplifier 78 is provided via a connection to the output terminal 28, another connection being provided to the output terminal 29 which is reference ground.

The ouput terminal of the operational amplifier 78, which is the output for the Schmidt trigger is connected to reference ground via a light emitting diode (LED) 85, which is part of an optical coupling circuit 84 and which is positioned physically opposite the base of a NPN phototransistor 85 having its collector connected to a circuit point between the resistor 35 and the resistor 37. The emitter of the phototransistor 85 is connected to a point between the resistor 34 and the resistor 33. Whenever the phototransistor 86 conducts, the resistor 34 is substantially shorted out, causing the control transistor 38 to conduct, with the result that the Darlington configured transistors 39-42 are turned off and are held off until the phototransistor 86 is turned off, this turning off occuring whenever the Schmidt trigger returns to its initial state upon the voltage across the capacitor 74 dropping below a second given level which is slightly less than the voltage level at which the Schmidt trigger changes from its initial off state to its on state. This prevents the capacitor 74 from becoming charged to too high a voltage level and maintains the D.C. output voltage between the two predetermined values.

In operation, the circuit arrangement shown in Fig. 8 is placed in operation by connecting the current regulating circuit 19 to the voltage source 22 which is shown as connected between the input terminals 20, 21 of the current regulating circuit 19 and operates in the same fashion as the circuits of Figs. 1A and 1B, in this case, the current spikes 48, 49 (Fig. 5C) charging the capacitor 74 via the inductor 73. The waveforms as illustrated in Figs. 5A-5C apply, thus a detailed discussion of the operation of the current regulating circuit 19 of Fig. 8 need not be separately set out. Only the function of the voltage sensing circuit 77 and the optical coupling circuit 84 need be discussed. The charging action of the pulses 48, 49 (Fig. 5C) takes place time and time again and continues until the capacitor 74 is fully charged to a first given level. During this time, the capacitor 74 may be discharging, via the output terminals 28, 29. When the voltage across the capacitor 74 reaches the first given level, the operational amplifier 78 changes to its high output state, causing the LED 85 to be turned on. This causes the phototransistor 86 to be turned on, placing a low value shunt across the resistor 34 and thus applying a higher voltage to its base. The transistor 38 accordingly is turned on, high current flows in the resistors 35 and 37 and the Darlington configured transistor 39-42 are turned substantially off. The high current spikes 48, 49 do not tend to charge the capacitor 74. When the voltage across the capacitor 74 falls to a second given level, which is slightly less than the first given level, because of load current discharging the capacitor 74, the operational amplifier 78 returns to its initial low state, the LED diode 85 is turned off and the phototransistor 86 returns to its nonconductive state.

The current regulating circuit 19 again starts supplying current pulses to the smoothing circuit 73 and the capacitor 74 tends to charge towards the first given level again.

As can be seen from the foregoing, the D.C. output voltage supplied to a load from the terminals 28, 29 is maintained between the first and second given levels.

It is to be appreciated that the voltage sensing circuit 77 and the optical coupler 84 can be used, instead of the Zener diode 27 in any of the power supplies illustrated in Figs. 1A, 1B and 2-4 if one wishes to provide voltage regulation of the D.C. output voltage of these circuits.

**Claims**

1.  A direct current power supply which includes, in series, a rectifying circuit which provides an unfiltered output, a current regulating circuit and a smoothing circuit across which output from the power supply is taken, wherein the current regulating circuit (19, Figs. 1A, 1B, 8; 50, Fig. 2; 57, Fig. 3; 69, Fig. 4) is responsive to the instantaneous amplitude of the unfiltered rectified output from the rectifying circuit to pass current to the smoothing circuit (23, Figs. 1A, B, 2-4; 23', Fig. 6; 23'', Fig. 7; 73, Fig. 8) during periods when the unfiltered rectified output is between a first level constituted by a voltage slightly higher than the voltage across the smoothing circuit and a higher second level and to block current to the smoothing circuit during periods when the unfiltered rectified output voltage is greater than the second level, characterized by the fact that the current regulating circuit (19, Figs. 1A, 1B, 8; 50, Fig. 2; 57, Fig. 3; 69, Fig. 4) includes a positive temperature coefficient resistance (43, Figs. 1A, 1B, 3, 8; 54, Fig. 2; 61, Fig. 4) through which at least a major portion of current to the smoothing circuit (23, Figs. 1A, 1B, 2-4; 23', Fig. 5; 23'', Fig. 7; 73, Fig. 8) flows and which increases in value as temperature increases limiting current flow to the smoothing circuit.

2.  A direct current power supply according to claim 1, characterized by the fact that the smoothing circuit (23, Figs. 1A, 1B, 2-4; 23', Fig. 6; 23'' Fig. 7; 73, Fig. 8) includes a storage capacitor (24, Figs 1A, 1B, 2-4, 6; 71, Fig. 7; 74, Fig. 8) connected in series with the current regulating circuit (19, Figs. 1A, 1B, 8; 50, Fig. 2; 57, Fig. 3; 69, Fig. 4).

3.  A direct current power supply according to either claim 1 or 2, characterized by the fact that the current regulating circuit (19, Figs. 1A, 1B, 8; 50, Fig. 2; 57, Fig. 3; 69, Fig. 4) includes a control stage (38) and a controlled stage (39-42, Figs. 1A, 1B, 2, 3, 8; 69; Fig. 4) having a control input connected to an output from the control stage, and the control stage is provided with negative feedback.

4.  A direct current power supply according to claim 3, characterized by the fact that the negative feedback is provided at least in part by internal negative feedback of the control stage (38).

5.  A direct current power supply according to claim 3, characterized by the fact that the negative feedback is provided at least in part by external negative feedback from the controlled stage (39-42. Figs. 2, 3; 69, Fig. 4) to the control stage (38).

6.  A direct current power supply according to claim 3, characterized by the fact that the negative feedback is provided by internal negative feedback of the control stage (38) and by external negative feedback from the controlled stage (39-42, Figs. 2, 3; 69, Fig. 4) to the control stage (38).

7.  A direct current power supply according to either claims 1 or 2, characterized by the fact that the positive temperature coefficient resistance (43, Figs. 1A, 1B, 8, 3; 54, Fig. 2; 61, Fig. 4), through which at least a major portion of current to the smoothing circuit (23, Figs. 1A, 1B, 2-4; 23', Fig. 6; 23'' Fig. 7; 73, Fig. 8) flows, serves as a fuse for fail safe operation of the circuit.

8.  A direct current power supply according to claim 1, characterized by the fact that the positive temperature coefficient resistance (43, Figs. 1A, 1B, 3, 8; 54, Fig. 2; 61, Fig. 4), through which at least a major portion of current to the smoothing circuit (23, Figs. 1A, 1B, 2-4; 23', Fig. 6; 23'', Fig. 7; 73, Fig. 8), flows is formed by metallization during integrated circuit manufacture or fabrication.

15

**9.** A direct current power supply according to either claim 1 or claim 2, characterized by the fact that the current regulating circuit (19, Figs. 1A, 1B, 8) includes a first resistance (33), a second resistance (34), and a third resistance (35) connected in series in the denominated order; the control stage includes a transistor (38) having its collector-emitter path connected in series with a series connection of a fourth resistance (37) and the third resistance and having is base-emitter path connected in parallel with the first resistance; and the second resistance is connected between the base of the transistor (38) and a circuit point defined by a connection between the third resistance and the fourth resistance.

**10.** A direct current power supply according to claim 9, characterized by the fact that relative sizes of the first resistance $R_1$ (33), the second resistance $R_2$ (34), the third resistance $R_3$ (35) and the fourth resistance $R_4$ (37), are defined as follows:

$R_1 = K_1 R_4$
$R_2 = K_2 R_4$
$R_3 = K_3 R_4$; where
$K_1 = .65 \pm .03$, $K_2 = 8.82 \pm .44$ and, $K_3 = 4.00 \pm .20$.

**11.** A direct current supply according to claim 10, characterized by the fact that

$K_1 = .65 \pm 0.006$, $K_2 = 8.82 \pm 0.088$ and, $K_3 = 4.00 \pm 0.040$.

**12.** A direct current power supply according to claim 1 or 2, characterized by the fact that the current regulating circuit (50, Fig. 2; 69, Fig. 4) includes a first resistance (51, Fig. 2; 58, Fig. 4), a second resistance (52, Fig. 2; 59, Fig. 4) and a third resistance (53, Fig. 2, 60, Fig. 4) connected in series in the denominated order; the control stage includes a transistor (38) having its collector-emitter path connected in series with a series connection of a fourth resistance (55, Fig. 2; 63, Fig. 4) and the third resistance, and having its base-emitter path connected in parallel with a series connection of the positive temperature coefficient resistance (54, Fig. 2; 61, Fig. 4) and the first resistance, and the second resistance is connected between the base of the transistor and a circuit point between the third resistance and the fourth resistance.

**13.** A direct current power supply according to claim 12 characterized by the fact that relative sizes of the first resistance $R'_1$ (51, Fig. 2; 58, Fig. 5) the second resistance $R'_2$ (52, Fig. 2; 59, Fig. 4) the third resistance $R'_3$ (53, Fig. 2; 60, Fig. 5), and the fourth resistance $R'_4$ (55, Fig. 2; 63, Fig. 4) are defined as follows:

$R'_1 = K'_1 R'_4$
$R'_2 = K'_2 R'_4$
$R'_3 = K'_3 R'_4$; where
$K'_1 = .57 \pm .03$, $K'_2 = 7.69 \pm .38$ and, $K'_3 = 4.00 \pm .20$.

**14.** A direct current power supply according to claim 13 characterized by the fact that

$K'_1 = .57 \pm 0.006$, $K'_2 = 7.69 \pm 0.076$ and, $K'_3 = 4.00 \pm .04$.

**15.** A direct current power supply according to claim 1 or claim 2, characterized by the fact that the current regulating circuit (57, Fig. 3) includes a given resistance (33a) and another given resistance (33a) providing in effect a first resistance (33a, 33b effectively connected in parallel), a second resistance (34) and a third resistance (35) connected in series in the denominated order; the control stage includes a transistor (38) having its collector-emitter path connected in series with a series connection of a fourth resistance (37) and the third resistance and having its base-emitter path connected in parallel with the given resistance (33a) and in parallel with a series connection of the another given resistance (33b) and a fifth resistance (43); and the second resistance is connected between the base of the transistor (38) and a circuit point between the third resistance and the fourth resistance.

**16.** A direct current power supply according to claim 15 characterized by the fact that relative sizes of first resistance $R_1$ (33a, 33b) the second resistance $R_2$ (34), the third resistance $R_3$ (35) and the fourth resistance $R_4$ (37) are defined as follows:

$R_1 = K_1 R_4$
$R_2 = K_2 R_4$
$R_3 = K_3 R_4$; where
$K_1 = .65 \pm .03$, $K_2 = 8.82 \pm .44$ and, $K_3 = 4.00 \pm .20$.

17. A direct current power supply according to claim 16 characterized by the fact that

$K_1 = .65 \pm 0.006$, $K_2 = 8.82 \pm 0.088$ and, $K_3 = 4.00 \pm 0.040$.

18. A direct current power supply according to claim 3, characterized by the fact that the controlled stage (69, Fig. 4) comprises a field effect transistor.

19. A direct current power supply according to claim 18 characterized by the fact that the field effect transistor is a MOSFET.

20. A direct current power supply according to claim 3, characterized by the fact that the controlled stage (39-42, Figs. 1A, 1B, 2, 3, 8) comprises a plurality of transistors connected in a Darlington arrangement.

21. A direct current power supply according to any one of claims 1-4 and 7-11 characterized by the fact that a D.C. output voltage sensing circuit (77, Fig. 8) is coupled to the smoothing circuit (73, Fig. 8) and produces a control signal whenever the D.C. output voltage reaches or exceeds a given level, and the current regulating circuit (19, Fig. 8) is controlled by the sensing circuit to assure that the D.C. output voltage does not exceed the given level.

22. A direct current power supply according to claim 21 characterized by the fact that an optical coupling circuit (84, Fig. 8) is coupled between the D.C. output voltage sensing circuit (77, Fig. 8) and the current regulating circuit (19, Fig. 8).

23. A direct current power supply according to claim 22 characterized by the fact that the voltage sensing circuit (77, Fig. 8) is a Schmidt trigger (78-83) which changes to one state whenever the D.C. output voltage exceeds the given level and remains in that state until the D.C. output voltage becomes less than a different level which is less than the given level.

**Revendications**

1. Alimentation à courant continu qui comporte, en série, un circuit redresseur qui délivre une sortie non filtrée, un circuit de régulation de courant et un circuit de filtrage aux bornes duquel est prélevée la sortie provenant de l'alimentation, dans laquelle le circuit de régulation de courant (19, figures 1A, 1B, 8; 50, figure 2; 57, figure 3; 69, figure 4) est sensible à l'amplitude instantanée de la sortie redressée non filtrée provenant du circuit redresseur afin de transmettre du courant au circuit de filtrage (23, figures 1A, B, 2 à 4; 23', figure 6; 23'', figure 7; 73, figure 8) pendant des périodes où la sortie redressée non filtrée est entre un premier niveau constitué par une tension légèrement plus élevée que la tension aux bornes du circuit de filtrage et un deuxième niveau plus élevé et afin de bloquer le courant vers le circuit de filtrage pendant des périodes où la tension de sortie redressée non filtrée est supérieure au deuxième niveau, caractérisée par le fait que le circuit de régulation de courant (19, figures 1A, 1B, 8; 50, figure 2; 57, figure 3; 69, figure 4) comporte une résistance à coefficient de température positif (43, figures 1A, 1B, 3, 8; 54, figure 2; 61, figure 4) à travers laquelle passe au moins une majeure partie du courant vers le circuit de filtrage (23, figures 1A, 1B, 2 à 4; 23', figure 6; 23'', figure 7; 73, figure 8) et qui augmente de valeur lorsque la température augmente, limitant l'écoulement de courant vers le circuit de filtrage.

2. Alimentation à courant continu selon la revendication 1, caractérisée par le fait que le circuit de filtrage (23, figures 1A, 1B, 2 à 4; 23', figure 6; 23'', figure 7; 73, figure 8) comporte un condensateur de stockage (24, figures 1A, 1B, 2 à 4, 6; 71, figure 7; 74, figure 8) relié en série au circuit de régulation de courant (19, figures 1A, 1B, 8; 50, figure 2; 57, figure 3; 69, figure 4).

3. Alimentation à courant continu selon la revendication 1 ou 2, caractérisée par le fait que le circuit de

EP 0 135 636 B1

régulation de courant (19, figures 1A, 1B, 8; 50, figure 2; 57, figure 3; 69, figure 4) comporte un étage de commande (38) et un étage commandé (39 à 42, figures 1A, 1B, 2, 3, 8; 69, figure 4) ayant une entrée de commande reliée à une sortie de l'étage de commande, et l'étage de commande est pourvu d'une rétroaction négative.

4. Alimentation à courant continu selon la revendication 3, caractérisée par le fait que la rétroaction négative est procurée au moins en partie par une rétroaction négative interne de l'étage de commande (38).

5. Alimentation à courant continu selon la revendication 3, caractérisée par le fait que la rétroaction négative est procurée au moins en partie par une rétroaction négative externe de l'étage commandé (39 à 42, figures 2, 3; 69, figure 4) vers l'étage de commande (38).

6. Alimentation à courant continu selon la revendication 3, caractérisée par le fait que la rétroaction négative est procurée par une rétroaction négative interne de l'étage de commande (38) et par une rétroaction négative externe de l'étage commandé (39 à 42, figures 2, 3; 69, figure 4) vers l'étage de commande (38).

7. Alimentation à courant continu selon la revendication 1 ou 2, caractérisée par le fait que la résistance à coefficient de température positif (43, figures 1A, 1B, 3, 8; 54, figure 2; 61, figure 4), à travers laquelle passe au moins une majeure partie du courant vers le circuit de filtrage (23, figures 1A, 1B, 2 à 4; 23', figure 6; 23'', figure 7; 73, figure 8), sert de fusible pour un fonctionnement en toute sécurité du circuit.

8. Alimentation à courant continu selon la revendication 1, caractérisée par le fait que la résistance à coefficient de température positif (43, figures 1A, 1B, 3, 8; 54, figure 2; 61, figure 4), à travers laquelle passe au moins une majeure partie du courant vers le circuit de filtrage (23, figures 1A, 1B, 2 à 4; 23', figure 6; 23'', figure 7; 73, figure 8), est formée par métallisation lors de la fabrication du circuit intégré.

9. Alimentation à courant continu selon la revendication 1 ou la revendication 2, caractérisée par le fait que le circuit de régulation de courant (19, figures 1A, 1B, 8) comporte une première résistance (33), une deuxième résistance (34), et une troisième résistance (35) reliées en série dans l'ordre cité; l'étage de commande comporte un transistor (38) ayant son passage collecteur-émetteur relié en série à un branchement en série d'une quatrième résistance (37) et de la troisième résistance et ayant son passage base-émetteur relié en parallèle à la première résistance; et la deuxième résistance est reliée entre la base du transistor (38) et un point du circuit défini par un branchement entre la troisième résistance et la quatrième résistance.

10. Alimentation à courant continu selon la revendication 9, caractérisée par le fait que les tailles relatives de la première résistance $R_1$ (33), de la deuxième résistance $R_2$ (34), de la troisième résistance $R_3$ (35) et de la quatrième résistance $R_4$ (37) sont définies comme suit :

$R_1$ = $K_1$ $R_4$
$R_2$ = $K_2$ $R_4$
$R_3$ = $K_3$ $R_4$ ; où
$K_1$ = 0,65 ± 0,3, $K_2$ = 8,82 ± 0,44 et $K_3$ = 4,00 ± 0,20.

11. Alimentation à courant continu selon la revendication 10, caractérisée par le fait que $K_1$ = 0,65 ± 0,006, $K_2$ = 8,82 + 0,088 et $K_3$ = 4,00 ± 0,040.

12. Alimentation à courant continu selon la revendication 1 ou 2, caractérisée par le fait que le circuit de régulation de courant (50, figure 2; 69, figure 4) comporte une première résistance (51, figure 2; 58, figure 4), une deuxième résistance (52, figure 2; 59, figure 4), et une troisième résistance (53, figure 2; 60, figure 4) reliées en série dans l'ordre cité; l'étage de commande comporte un transistor (38) ayant son passage collecteur-émetteur relié en série à un branchement en série d'une quatrième résistance (55, figure 2; 63, figure 4) et de la troisième résistance, et ayant son passage base-émetteur relié en parallèle à un branchement en série de la résistance à coefficient de température positif (54, figure 2; 61, figure 4) et de la première résistance, et la deuxième résistance est reliée entre la base du transistor et un point du circuit entre la troisième résistance et la quatrième résistance.

18

EP 0 135 636 B1

13. Alimentation à courant continu selon la revendication 12, caractérisée par le fait que les tailles relatives de la première résistance $R'_1$ (51, figure 2; 58, figure 4), de la deuxième résistance $R'_2$ (52, figure 2; 59, figure 4), de la troisième résistance $R'_3$ (53, figure 2; 60, figure 4) et de la quatrième résistance $R'_4$ (55, figure 2; 63, figure 4) sont définies comme suit :

$R'_1 = K'_1 R'_4$
$R'_2 = K'_2 R'_4$
$R'_3 = K'_3 R'_4$ ; où
$K'_1 = 0,57 \pm 0,3$, $K'_2 = 7,69 \pm 0,38$ et $K'_3 = 4,00 \pm 0,20$.

14. Alimentation à courant continu selon la revendication 13, caractérisée par le fait que $K'_1 = 0,57 \pm 0,006$, $K'_2 = 7,69 \pm 0,076$ et $K'_3 = 4,00 \pm 0,04$.

15. Alimentation à courant continu selon la revendication 1 ou la revendication 2, caractérisée par le fait que le circuit de régulation de courant (57, figure 3) comporte une résistance donnée (33a) et une autre résistance donnée (33a) procurant en fait une première résistance (33a, 33b reliées de manière effective en parallèle), une deuxième résistance (34), et une troisième résistance (35) reliées en série dans l'ordre cité; l'étage de commande comporte un transistor (38) ayant son passage collecteur-émetteur relié en série à un branchement en série d'une quatrième résistance (37) et de la troisième résistance et ayant son passage base-émetteur relié en parallèle à la résistance donnée (33a) et en parallèle à un raccordement en série de l'autre résistance donnée (33b) et d'une cinquième résistance (43); et la deuxième résistance est reliée entre la base du transistor (38) et un point du circuit entre la troisième résistance et la quatrième résistance.

16. Alimentation à courant continu selon la revendication 15, caractérisée par le fait que les tailles relatives de la première résistance $R_1$ (33a, 33b), de la deuxième résistance $R_2$ (34), de la troisième résistance $R_3$ (35) et de la quatrième résistance $R_4$ (37) sont définies comme suit :

$R_1 = K_1 R_4$
$R_2 = K_2 R_4$
$R_3 = K_3 R_4$ ; où
$K_1 = 0,65 \pm 0,3$, $K_2 = 8,82 \pm 0,44$ et $K_3 = 4,00 \pm 0,20$.

17. Alimentation à courant continu selon la revendication 16, caractérisée par le fait que $K_1 = 0,65 \pm 0,006$, $K_2 = 8,82 \pm 0,088$ et $K_3 = 4,00 \pm 0,040$.

18. Alimentation à courant continu selon la revendication 3, caractérisée par le fait que l'étage commandé (69, figure 4) comporte un transistor à effet de champ.

19. Alimentation à courant continu selon la revendication 18, caractérisée par le fait que le transistor à effet de champ est un MOSFET.

20. Alimentation à courant continu selon la revendication 3, caractérisée par le fait que l'étage commandé (39 à 42, figures 1A, 1B, 2, 3, 8) comporte plusieurs transistors reliés en Darlington.

21. Alimentation à courant continu selon l'une quelconque des revendications 1 à 4 et 7 à 11, caractérisée par le fait qu'un circuit de détection de tension de sortie à courant continu (77, figure 8) est relié au circuit de filtrage (73, figure 8) et produit un signal de commande chaque fois que la tension de sortie à courant continu atteint ou dépasse un niveau donné, et le circuit de régulation de courant (19, figure 8) est commandé par le circuit de détection afin de s'assurer que la tension de sortie à courant continu ne dépasse pas le niveau donné.

22. Alimentation à courant continu selon la revendication 21, caractérisée par le fait qu'un circuit de couplage optique (84, figure 8) est relié entre le circuit de détection de tension de sortie à courant continu (77, figure 8) et le circuit de régulation de courant (19, figure 8).

23. Alimentation à courant continu selon la revendication 22, caractérisée par le fait que le circuit de détection de tension (77, figure 8) est un trigger de Schmidt (78 à 83) qui change d'état chaque fois

EP 0 135 636 B1

que la tension de sortie à courant continu dépasse le niveau donné et reste dans cet état jusqu'à ce que la tension de sortie à courant continu devienne inférieure à un niveau différent qui est inférieur au niveau donné.

**Patentansprüche**

1. Gleichstrom-Netzteil, das in Reihenschaltung aufweist: eine Gleichrichterschaltung, die einen ungefilterten Ausgang liefert, eine Stromregelschaltung und eine Abgleichschaltung, über die der Ausgang von dem Netzteil abgenommen wird, wobei die Stromregelschaltung (19, Fign. 1A, 1B, 8; 50, Fig. 2; 57, Fig. 3; 69, Fig. 4) auf die momentane Amplitude des ungefilterten, gleichgerichteten Ausganges von der Gleichrichterschaltung anspricht, um zu den Zeiten Strom an die Abgleichschaltung (23, Fign. 1A, 1B, 2-4; 23', Fig. 6; 23'', Fig. 7; 73, Fig. 8) zu legen, wenn der ungefilterte, gleichgerichtete Ausgang zwischen einem ersten Pegel, der von einer geringfügig größeren Spannung als die über der Abgleichschaltung liegenden Spannung gebildet wird, und einem höheren zweiten Pegel liegt, und Stromfluß an die Abgleichschaltung zu den Zeiten zu sperren, wenn der ungefilterte, gleichgerichtete Ausgang größer ist als der zweite Pegel, dadurch gekennzeichnet, daß die Stromregelschaltung (19, Fign. 1A, 1B, 8; 50, Fig. 2; 57, Fig. 3; 69, Fig. 4) einen Widerstand mit positivem Temperaturkoeffizienten (43, Fign. 1A, 1B, 3, 8; 54, Fig. 2; 61, Fig. 4) aufweist, durch den mindestens ein Hauptanteil des Stromflusses an die Abgleichschaltung (23, Fign. 1A, 1B, 2-4; 23', Fig. 5; 23'', Fig. 7; 73, Fig. 8) fließt und der mit steigender Temperatur in seinem Wert zunimmt, wodurch der Stromfluß an die Abgleichschaltung begrenzt wird.

2. Gleichstrom-Netzteil nach Anspruch 1, dadurch gekennzeichnet, daß die Abgleichschaltung (23, Fign. 1A, 1B, 2-4; 23', Fig. 6; 23'', Fig. 7; 73, Fig. 8) einen Speicherkondensator (24, Fign. 1A, 1B, 2-4, 6; 71, Fig. 7; 74, Fig. 6) aufweist, der in Reihe mit der Stromregelschaltung (19, Fign. 1A, 1B, 8; 50, Fig. 2; 57, Fig. 3; 69, Fig. 4) geschaltet ist.

3. Gleichstrom-Netzteil nach Anspruch 1 oder 2, dadurch gekennzeichnet, daß die Stromregelschaltung (19, Fign. 1A, 1B, 8; 50, Fig. 2; 57, Fig. 3; 69, Fig. 4) eine Steuerstufe (38) und eine gesteuerte Stufe (39-42, Fign. 1A, 1B, 2, 3, 8; 69; Fig. 4) aufweist, deren Steuereingang mit einem Ausgang von der Steuerstufe verbunden ist, und die Steuerstufe mit einer negativen Rückkopplung versehen ist.

4. Gleichstrom-Netzteil nach Anspruch 3, dadurch gekennzeichnet, daß die negative Rückkopplung zumindest zum Teil durch die interne negative Rückkopplung der Steuerstufe (38) bereitgestellt wird.

5. Gleichstrom-Netzteil nach Anspruch 3, dadurch gekennzeichnet, daß die negative Rückkopplung zumindest zum Teil von der äußeren negativen Rückkopplung von der gesteuerten Stufe (39-42, Fign. 2, 3; 69, Fig. 4) an die Steuerstufe (38) gelegt wird.

6. Gleichstrom-Netzteil nach Anspruch 3, dadurch gekennzeichnet, daß die negative Rückkopplung von der internen negativen Rückkopplung der Steuerstufe (38) sowie von der äußeren negativen Rückkopplung von der gesteuerten Stufe (39-42, Fign. 2, 3; 69, Fig. 4) an die Steuerstufe (38) geliefert wird.

7. Gleichstrom-Netzteil nach Anspruch 1 oder 2, dadurch gekennzeichnet, daß der Widerstand mit positivem Temperaturkoeffizienten (43, Fign. 1A, 1B, 8, 3; 54, Fig. 2; 61, Fig. 4), durch den mindestens ein Hauptanteil des Stromes an die Abgleichschaltung (23, Fign. 1A, 1B, 2-4; 23', Fig. 6; 23'', Fig. 7; 73, Fig. 8) fließt, als Sicherung für den störungsfreien Betrieb der Schaltung dient.

8. Gleichstrom-Netzteil nach Anspruch 1, dadurch gekennzeichnet, daß der Widerstand mit positivem Temperaturkoeffizienten (43, Fign. 1A, 1B, 8, 3; 54, Fig. 2; 61, Fig. 4), durch den mindestens ein Hauptanteil des Stromes an die Abgleichschaltung (23, Fign. 1A, 1B, 2-4; 23', Fig. 6; 23'', Fig. 7; 73, Fig. 8) fließt, durch Metallisierung während der Herstellung oder Fabrikation der integrierten Schaltung gebildet wird.

9. Gleichstrom-Netzteil nach Anspruch 1 oder 2, dadurch gekennzeichnet, daß die Stromregelschaltung (19, Fign. 1A, 1B, 8) einen ersten Widerstand (33), einen zweiten Widerstand (34) und einen dritten Widerstand (35) aufweist, die in der angegebenen Folge in Reihe geschaltet sind; die Steuerstufe einen Transistor (38) aufweist, dessen Kollektor-Emitter-Strecke in Reihe mit einer Reihenschaltung eines

20

vierten Widerstandes (37) und des dritten Widerstandes geschaltet ist und dessen Basis-Emitter-Strecke parallel mit dem ersten Widerstand geschaltet ist; und der zweite Widerstand zwischen der Basis des Transistors (38) und einem Schaltungspunkt geschaltet ist, welcher von einer Verbindung Zwischen dem dritten und dem vierten Widerstand definiert wird.

10. Gleichstrom-Netzteil nach Anspruch 9, dadurch gekennzeichnet, daß die relativen Größen des ersten Widerstandes $R_1$ (33), des zweiten Widerstandes $R_2$ (34), des dritten Widerstandes $R_3$ (35) und des vierten Widerstandes $R_4$ (37) wie folgt definiert sind:

$R_1 = K_1 R_4$
$R_2 = K_2 R_4$
$R_3 = K_3 R_4$; wobei

$K_1 = 0{,}65 \pm 0{,}03$, $K_2 = 8{.}82 \pm 0{,}44$ und, $K_3 = 4{.}00 \pm 0{,}20$.

11. Gleichstrom-Netzteil nach Anspruch 10, dadurch gekennzeichnet, daß $K_1 = 0{,}65 \pm 0{,}006$, $K_2 = 8{,}82 \pm 0{,}088$ und $K_3 = 4{,}00 \pm 0{,}040$.

12. Gleichstrom-Netzteil nach Anspruch 1 oder 2, dadurch gekennzeichnet, daß die Stromregelschaltung (50, Fig. 2; 69, Fig. 4) einen ersten Widerstand (51, Fig. 2; 58, Fig. 4), einen zweiten Widerstand (52, Fig. 2, 59, Fig. 4) und einen dritten Widerstand (53, Fig. 2; 60, Fig. 4) aufweist, die in der angegebenen Folge in Reihe geschaltet sind; die Steuerstufe einen Transistor (38) aufweist, dessen Kollektor-Emitter-Strecke in Reihe mit einer Reihenschaltung eines vierten Widerstandes (55, Fig. 2; 63, Fig. 4) und des dritten Widerstandes geschaltet ist, und dessen Basis-Emitter-Strecke parallel mit einer Reihenschaltung des Widerstandes mit positiven Temperaturkoeffizienten (54, Fig. 2; 61, Fig. 4) und des ersten Widerstandes geschaltet ist; und der zweite Widerstand zwischen der Basis des Transistors und einem Schaltungspunkt zwischen dem dritten und dem vierten Widerstand geschaltet ist.

13. Gleichstrom-Netzteil nach Anspruch 12, dadurch gekennzeichnet, daß die relativen Größen des ersten Widerstandes $R'_1$ (51, Fig. 2; 58, Fig. 5), des zweiten Widerstandes $R'_2$ (52, Fig. 2; 59, Fig. 4), des dritten Widerstandes $R'_3$ (53, Fig. 2; 60, Fig. 5) und des vierten Widerstandes $R'_4$ (55, Fig. 2; 63, Fig. 4) wie folgt definiert sind:

$R'_1 = K'_1 R'_4$
$R'_2 = K'_2 R'_4$
$R'_3 = K'_3 R'_4$; wobei

$K'_1 = 0{,}57 \pm 0{,}03$, $K'_2 = 7{,}69 \pm 0{,}38$ und
$K'_3 = 4{,}00 \pm 0{,}20$.

14. Gleichstrom-Netzteil nach Anspruch 13, dadurch gekennzeichnet, daß $K'_1 = 0{,}57 \pm 0{,}006$, $K'_2 = 7{,}69 \pm 0{,}076$ und $K'_3 = 4{,}00 \pm 0{,}04$.

15. Gleichstrom-Netzteil nach Anspruch 1 oder 2, dadurch gekennzeichnet, daß die Stromregelschaltung (57, Fig. 3) einen gegebenen Widerstand und einen weiteren gegebenen Widerstand (33a) aufweist, woraus sich eine Reihenschaltung aus einem ersten Widerstand (33a, 33b in Parallelschaltung), einem zweiten Widerstand (34) und einem dritter Widerstand (35) in dieser Folge ergibt; die Steuerstufe einen Transistor (38) aufweist, dessen Kollektor-Emitter-Strecke mit einer Reihenschaltung eines vierten Widerstandes (37) und des dritten Widerstandes in Reihe geschaltet ist und dessen Basis-Emitter-Strecke mit dem gegebenen Widerstand (33a) parallel geschaltet ist und parallel mit einer Reihenschaltung eines weiteren gegebenen Widerstandes (33b) und eines fünften Widerstandes (43) geschaltet ist; und der zweite Widerstand zwischen der Basis des Transistors (38) und einem Schaltungspunkt zwischen dem dritten und dem vierten Widerstand geschaltet ist.

16. Gleichstrom-Netzteil nach Anspruch 15, dadurch gekennzeichnet, daß die relativen Größen des ersten Widerstandes $R_1$ (33a, 33b), des zweiten Widerstandes $R_2$ (34), des dritten Widerstandes $R_3$ (35) und des vierten Widerstandes $R_4$ (37) wie folgt definiert sind:

$R_1 = K_1 R_4$
$R_2 = K_2 R_4$
$R_3 = K_3 R_4$; wobei

$K_1 = 0,65 \pm 0,03$, $K_2 = 8,82 \pm 0,44$ und $K_3 = 4,00 \pm 0,20$.

17. Gleichstrom-Netzteil nach Anspruch 16, dadurch gekennzeichnet, dass $K_1 = 0,65 \pm 0.006$, $K_2 = 8.82 \pm 0.088$ und $K_3 = 4.00 \pm 0.040$.

18. Gleichstrom-Netzteil nach Anspruch 3, dadurch gekennzeichnet daß die gesteuerte Stufe (69, Fig. 4) einen Feldeffekttransistor aufweist.

19. Gleichstrom-Netzteil nach Anspruch 3, dadurch gekennzeichnet, daß der Feldeffekttransistor ein MOSFET ist.

20. Gleichstrom-Netzteil nach Anspruch 3, dadurch gekennzeichnet, daß die gesteuerte Stufe (39-42, Fign. 1A, 1B, 2, 3, 8) eine Vielzahl von in Darlington-Anordnung geschalteten Transistoren umfaßt.

21. Gleichstrom-Netzteil nach einem der Ansprüche 1-4 und 7-11, dadurch gekennzeichnet, daß eine gleichstromausgangsspannungsempfindliche Schaltung (77, Fig. 8) mit der Abgleichschaltung (73, Fig. 8) gekoppelt ist und immer dann ein Steuersignal erstellt, wenn die Gleichstromausgangsspannung einen gegebenen Pegel erreicht bzw. übersteigt, und die Stromregelschaltung (19, Fig. 8) von der empfindlichen Schaltung gesteuert wird, um sicherzustellen, daß die Gleichstromausgangsspannung den gegebenen Pegel nicht übersteigt.

22. Gleichstrom-Netzteil nach Anspruch 21, dadurch gekennzeichnet, daß eine optische Koppelschaltung (84, Fig 8) zwischen der gleichstromausgangsspannungsempfindlichen Schaltung (77, Fig. 8) und der Stromregelschaltung (19, Fig. 8) gekoppelt ist.

23. Gleichstrom-Netzteil nach Anspruch 22, dadurch gekennzeichnet, daß die spannungsempfindliche Schaltung (77, Fig. 8) ein Schmitt-Trigger (78-83) ist, der immer dann auf einen Zustand wechselt, wenn die Gleichstromausgangsspannung den gegebenen Pegel überschreitet, und solange in diesem Zustand bleibt, bis die Gleichstromausgangsspannung unter einen anderen Pegel absinkt, der geringer ist als der gegebene Pegel.

FIG.1A

FIG.1B

23

FIG.2

FIG.3

FIG.4

FIG.6

FIG.5A

FIG.5B

FIG.5C

FIG.7

FIG.8